# EUROPEAN PATENT APPLICATION

(11) **EP 4 230 451 A1**
(43) Date of publication of application: **23.08.2023**
(21) Application number: 23157475.7
(22) Date of filing: 20.02.2023
(51) Int. Cl.: B60H 1/00

(54) **VEHICULAR AIR CONDITIONER**

(30) Priority: 22.02.2022 JP 2022025709
(71) Applicant: Valeo Japan Co., Ltd, Kumagaya-shi, Saitama 360-0193 (JP)
(72) Inventor: ARAKI, Daisuke, Kumagaya-shi, 360-0193 (JP)
(74) Representative: Valeo Systèmes Thermiques

(57) **Abstract**

An object of the present disclosure is to provide a vehicular air conditioner capable of preventing an increase in size of the entire air conditioner while detecting air in a vehicle compartment. A vehicular air conditioner 1 according to the present disclosure includes: an air-blowing unit 10 including an intake section 12 and an air-blowing section 13; a temperature control unit 20; a duct 30 connecting the air-blowing unit and the temperature control unit; and a particle sensor 40, the air-blowing unit and the temperature control unit being disposed along a vehicle width direction, in which the vehicular air conditioner includes a boundary region R formed by a first wall 11 of an outer wall surface of the air-blowing unit, the first wall facing a direction of an outer wall surface of the temperature control unit, a second wall 21 of the outer wall surface of the temperature control unit, the second wall facing a direction of the first wall, and a third wall 31 of an outer wall surface of the duct, the third wall connecting the first wall and the second wall, the boundary region is configured to face a vehicle rear side, and a space occupied by the particle sensor overlaps with the boundary region.

## Description

### BACKGROUND OF THE INVENTION

### 1. Field of the Invention

The present disclosure relates to a vehicular air conditioner, and more particularly, to a vehicular air conditioner equipped with a particle sensor.

### 2. Description of the Related Art

A vehicular air conditioner equipped with a particle sensor is known (see Patent Literature 1 or 2, for example). In both air conditioners of Patent Literature 1 and Patent Literature 2, a particle sensor can measure a particle concentration in air in a vehicle compartment. In the air conditioner disclosed in Patent Literature 1, the particle sensor is attached from outside to a portion of a blower accommodation section where an air introduction chamber is formed, the air introduction chamber being provided at a position in the vicinity of an end portion of a particle filter. In the air conditioner disclosed in Patent Literature 2, the particle sensor is attached to a lid member that closes an outlet of a filter of a filter housing.

### Citation List

### Patent Literature

Patent Literature 1: JP-A-2020-071140
Patent Literature 2: JP-A-2019-10996

### SUMMARY OF THE INVENTION

However, in Patent Literature 1 and Patent Literature 2, since the particle sensor protrudes with respect to an outer shape of an air conditioner, there is a problem that the entire air conditioner is increased in size. It is desired to prevent an increase in size of a product while measuring a particle concentration in air in a vehicle compartment.

An object of the present disclosure is to provide a vehicular air conditioner capable of preventing an increase in size of the entire air conditioner while detecting air in a vehicle compartment.

A vehicular air conditioner according to the present invention includes: an air-blowing unit including an intake section and an air-blowing section; a temperature control unit; a duct connecting the air-blowing unit and the temperature control unit; and a particle sensor, the air-blowing unit and the temperature control unit being disposed along a vehicle width direction, in which the vehicular air conditioner includes a boundary region formed by a first wall of an outer wall surface of the air-blowing unit, the first wall facing a direction of an outer wall surface of the temperature control unit, a second wall of the outer wall surface of the temperature control unit, the second wall facing a direction of the first wall, and a third wall of an outer wall surface of the duct, the third wall connecting the first wall and the second wall, the boundary region is configured to face a vehicle rear side, and a space occupied by the particle sensor overlaps with the boundary region.

The vehicular air conditioner according to the invention includes an aspect in which the intake section includes an inside air introduction port configured to introduce air in a vehicle compartment, and the inside air introduction port is located above a center height position at which the boundary region is bisected in a vehicle up-and-down direction.

In the vehicular air conditioner according to the invention, it is preferable that the vehicle compartment includes a passenger compartment (4) behind an instrument panel (3), and the particle sensor is disposed on a flow path of air guided from inside of the passenger compartment to the inside air introduction port. The particle sensor can determine whether or not air in the passenger compartment is clean by detecting air flowing in the passenger compartment.

In the vehicular air conditioner according to the invention, it is preferable that a space occupied by the particle sensor overlaps with a region of the boundary region below a center height position at which the boundary region is bisected in the vehicle up-and-down direction. The particle sensor can more reliably detect air that has passed through the passenger compartment.

In the vehicular air conditioner according to the invention, it is preferable that the particle sensor includes a sensor housing, an air intake port provided in the sensor housing, and a discharge port configured to discharge measured air, and the particle sensor is attached such that the air intake port is disposed below the discharge port. The particle sensor can more reliably detect air that has passed through the passenger compartment.

In the vehicular air conditioner according to the invention, it is preferable that the particle sensor is accommodated within the boundary region. An increase in size of the vehicular air conditioner can be further prevented.

In the vehicular air conditioner according to the invention, it is preferable that the particle sensor is attached to the first wall. The particle sensor can more reliably detect air that has passed through the passenger compartment.

In the vehicular air conditioner according to the invention, it is preferable that the particle sensor includes a sensor housing and an air intake port provided in the sensor housing, and the air intake port opens toward the boundary region. The particle sensor can more reliably detect air that has passed through the passenger compartment.

In the vehicular air conditioner according to the invention, it is preferable that the particle sensor includes a sensor housing and an air intake port provided in the sensor housing, and the air intake port opens toward the vehicle rear side. The particle sensor can more reliably detect air that has passed through the passenger compartment.

According to the present disclosure, it is possible to provide the vehicular air conditioner capable of preventing an increase in size of the entire air conditioner while detecting air in the vehicle compartment.

### BRIEF DESCRIPTION OF THE DRAWINGS

Fig. 1 is a schematic rear view showing an example of a vehicular air conditioner according to the present embodiment.
Fig. 2 is a schematic plan view showing the example of the vehicular air conditioner according to the present embodiment.
Fig. 3 is a schematic cross-sectional view taken along line X-X of Fig. 1, in which an instrument panel is added.
Fig. 4 is a schematic rear view showing a modification of an attachment form of a particle sensor.

### DESCRIPTION OF THE PREFERRED EMBODIMENTS

An aspect of the invention will be described below with reference to accompanying drawings. An embodiment to be described below is an example of the invention, and the invention is not limited to the following embodiment. In the specification and the drawings, elements having identical reference signs are the same components. Various modifications may be made as long as advantageous effects of the invention is achieved.

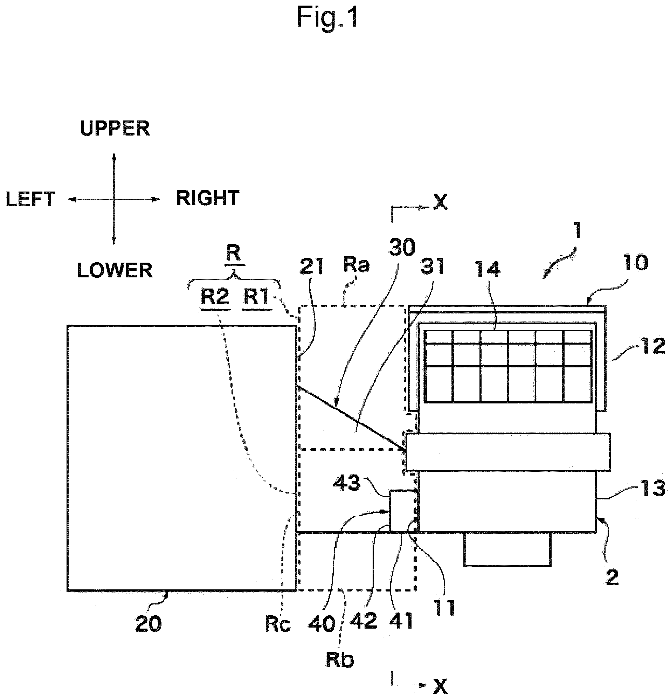

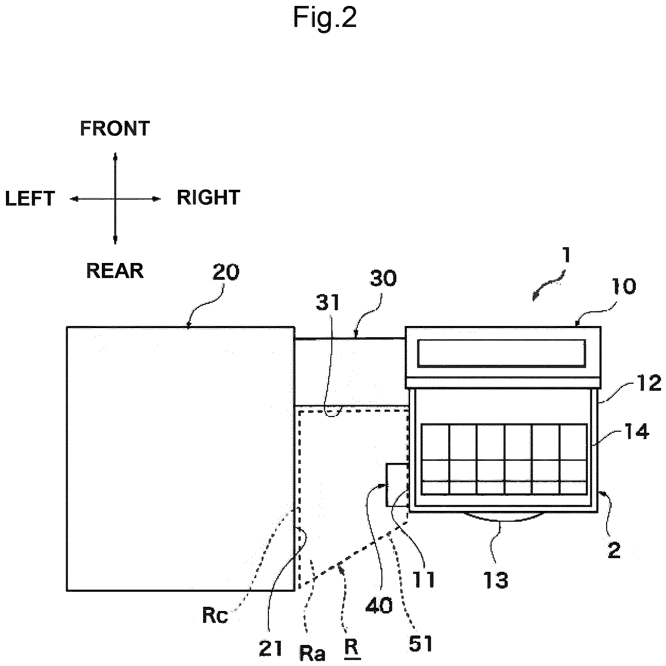

Fig. 1 is a schematic rear view showing an example of a vehicular air conditioner according to the present embodiment. Fig. 2 is a schematic plan view showing the example of the vehicular air conditioner according to the present embodiment. In Figs. 1 and 2, upper and lower indicate an up-and-down direction of a vehicle, left and right indicate a vehicle width direction, and front and rear indicate a forward and backward direction of the vehicle. A vehicular air conditioner 1 according to the embodiment includes: an air-blowing unit 10 including an intake section 12 and an air-blowing section 13; a temperature control unit 20; a duct 30 connecting the air-blowing unit 10 and the temperature control unit 20; and a particle sensor 40, the air-blowing unit 10 and the temperature control unit 20 being disposed along a vehicle width direction, in which the vehicular air conditioner 1 includes a boundary region R formed by a first wall 11 of an outer wall surface of the air-blowing unit 10, the first wall 11 facing a direction of an outer wall surface of the temperature control unit 20, a second wall 21 of the outer wall surface of the temperature control unit 20, the second wall 21 facing a direction of the first wall 11, and a third wall 31 of an outer wall surface of the duct 30, the third wall 31 connecting the first wall 11 and the second wall 21, the boundary region R is configured to face a vehicle rear side, and a space occupied by the particle sensor 40 overlaps with the boundary region R.

The vehicular air conditioner 1 is a device that forms airflow having an appropriate temperature and blows the airflow into a passenger compartment. The vehicular air conditioner 1 is a so-called horizontal type air conditioner in which the air-blowing unit 10 and the temperature control unit 20 are disposed along the vehicle width direction. Figs. 1 and 2 show, as an example, an example in which the air-blowing unit 10 is disposed on a right side and the temperature control unit 20 is disposed on a left side with respect to the vehicle width direction, but the invention is not limited to this, and the air-blowing unit 10 may be disposed on the left side and the temperature control unit 20 may be disposed on the right side with respect to the vehicle width direction. The vehicular air conditioner 1 has an HVAC case 2, and the air-blowing unit 10, the duct 30, and the temperature control unit 20 are integrated by the HVAC case 2. The vehicular air conditioner 1 is disposed in a space between a dash panel that partitions an engine room and a vehicle compartment and an instrument panel 3 that is provided on a vehicle rear side of the dash panel.

The air-blowing unit 10 is a portion that forms airflow for air conditioning. In the intake section 12, an outside air introduction port (not shown) that introduces air outside the vehicle compartment (outside air) and an inside air introduction port 14 that introduces air inside the vehicle compartment (inside air) open toward the HVAC case 2, and an inside and outside air switching door (not shown) that opens and closes the outside air introduction port and the inside air introduction port 14 is disposed in the HVAC case. By opening and closing the inside and outside air switching door, a ratio of air flowing in from the outside air introduction port to air flowing in from the inside air introduction port 14 is adjusted. The air-blowing section 13 is connected to downstream of the intake section 12, and accommodates a blower (not shown) . When the blower is driven, air is drawn in from the outside air introduction port and/or the inside air introduction port 14.

The temperature control unit 20 is a portion that controls a temperature of air drawn in by the blower and blows the air into the passenger compartment. It is preferable that the temperature control unit 20 accommodates an evaporator (not shown). The evaporator is a cooling heat exchanger, and dehumidifies and cools air as necessary. Further, the temperature control unit 20 may accommodate an air mix door (not shown) and a heating heat exchanger (not shown) . The air mix door adjusts a proportion of air passing through the heating heat exchanger and air bypassing the heating heat exchanger. The heating heat exchanger heats air that has passed through the evaporator as necessary to form temperature-controlled air. A defrost opening (not shown), a vent opening (not shown), and a foot opening (not shown) are provided at the most downstream section of the temperature control unit 20. Each opening is connected to an outlet (not shown) in the passenger compartment directly or indirectly via an outlet duct (not shown).

The duct 30 is a portion, which connects an outlet of the air-blowing section 13 and an inlet of the temperature control unit 20, of the air-blowing unit 10, and has a depth smaller than a depth of the air-blowing unit 10 and a depth of the temperature control unit 20, as shown in Fig. 2. Here, the depth refers to a length in a front-rear direction of the vehicle.

The particle sensor 40 is a measuring instrument that detects and counts particles in air. A type of the particle sensor is not particularly limited, but it is preferable that the particle sensor includes a sensor housing 41 and an air intake port 42 provided in the sensor housing 41 to take in air. The sensor housing 41 is a housing forming an outer shell of the particle sensor, and accommodates a light emitting section (not shown), a light receiving section (not shown), and the like of a sensor. The air intake port 42 is an opening provided in the sensor housing 41, and is an opening that takes in air to be detected into the particle sensor 40. It is preferable that the particle sensor 40 includes a blower (not shown) that takes in air into the sensor housing 41. Thus, the particle sensor 40 can take in and discharge air by itself.

The first wall 11 is an outer wall of the HVAC case 2 that forms the air-blowing unit 10 when the air-blowing unit 10 is seen in a plan view from the temperature control unit 20. The second wall 21 is an outer wall of the HVAC case 2 that forms the temperature control unit 20 when the temperature control unit 20 is seen in a plan view from the air-blowing unit 10. The third wall 31 is a wall, which connects the first wall 11 and the second wall 21, of the outer wall of the HVAC case 2 that forms the duct 30. The third wall 31 faces the vehicle rear side. The first wall 11, the third wall 31, and the second wall 21 are connected to each other to form a substantially U-shaped or substantially J-shaped cross section. The boundary region R is a region formed by the first wall 11, the third wall 31, and the second wall 21, and is a region between the air-blowing unit 10 and the temperature control unit 20. The boundary region R has a columnar three-dimensional shape, and has an upper surface Ra, a lower surface Rb, and a side surface Rc. The upper surface Ra of the boundary region R is a virtual surface on a virtual horizontal plane passing through an upper end at the highest position of the first wall 11, the second wall 21, and the third wall 31. The lower surface Rb of the boundary region R is a virtual surface on a virtual horizontal plane passing through a lower end at the lowest position of the first wall 11, the second wall 21, and the third wall 31. The side surface Rc of the boundary region R is a virtual surface that includes, in addition to an outer wall surface of the first wall 11, an outer wall surface of the third wall 31, and an outer wall surface of the second wall 21 that are connected to each other, a virtual surface 51 connecting a side of the first wall 11 on the vehicle rear side and a side of the second wall 21 on the vehicle rear side, and connects the upper surface Ra and the lower surface Rb of the boundary region R.

The space occupied by the particle sensor 40 overlaps with the boundary region R. In the present embodiment, the space occupied by the particle sensor 40 overlaps with the boundary region R, which includes an aspect (for example, as shown in Figs. 1 to 4) in which the entire particle sensor 40 is accommodated in the boundary region R, and an aspect (not shown) in which a portion of the particle sensor 40 protrudes from the boundary region R, and the other portion is in the boundary region R. A three-dimensional outer shape of the vehicular air conditioner 1 is formed to have uneven portions. Among spaces generated by the uneven portions, a space in a silhouette of the vehicular air conditioner 1 in a plan view, a front view, a side view, or a bottom view (hereinafter, simply referred to as a "two-dimensional silhouette of the vehicular air conditioner 1" in some cases) becomes a dead space. An example of such a space is the boundary region R. In the present embodiment, by overlapping the space occupied by the particle sensor 40 with the boundary region R, the particle sensor 40 does not protrude greatly from the two-dimensional silhouette of the vehicular air conditioner 1, so that the dead space can be effectively used to prevent an increase in size of the vehicular air conditioner 1.

In the vehicular air conditioner 1 according to the present embodiment, it is preferable that the particle sensor 40 is accommodated within the boundary region R. An increase in size of the vehicular air conditioner 1 can be further prevented.

The vehicular air conditioner 1 according to the present embodiment includes an aspect in which the intake section 12 includes the inside air introduction port 14 that introduces air in the vehicle compartment, and the inside air introduction port 14 is located above a center height position at which the boundary region R is bisected in the vehicle up-and-down direction, as shown in Fig. 1.

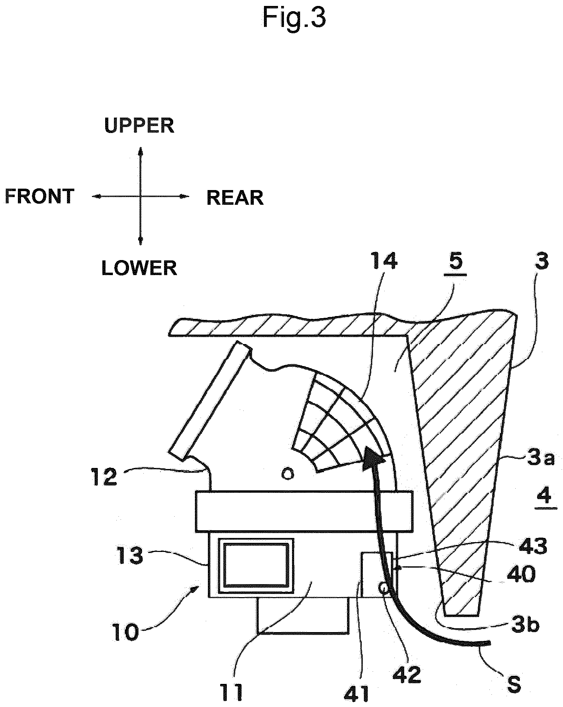

Fig. 3 is a schematic cross-sectional view taken along line X-X of Fig. 1, in which the instrument panel 3 is added. In the vehicular air conditioner 1 according to the present embodiment, it is preferable that the vehicle compartment includes a passenger compartment 4 behind the instrument panel 3, and the particle sensor 40 is disposed on a flow path of air guided from the inside of the passenger compartment 4 to the inside air introduction port 14. It is more preferable that the air intake port 42 of the particle sensor 40 is disposed on the flow path of air guided from the inside of the passenger compartment 4 to the inside air introduction port 14. The passenger compartment 4 refers to a space in which a passenger rides in the vehicle compartment, and is a space behind the instrument panel 3 in the vehicle compartment. The flow path of air guided from the inside of the passenger compartment 4 to the inside air introduction port 14 continues from a lower side of the instrument panel 3 to the inside air introduction port 14 through a space 5 covered by the instrument panel 3, and includes, for example, the boundary region R and a space between a side surface 3b of the instrument panel 3 opposite to a side surface 3a on the passenger compartment 4 side and an outer surface of the air-blowing unit 10. An example of airflow will be described with reference to Fig. 3. For example, as indicated by an arrow S in Fig. 3, air in the passenger compartment 4 passes the lower side of the instrument panel 3 to enter the space 5 covered by the instrument panel 3 (a space in the vehicle compartment in which the vehicular air conditioner 1 is installed), rises along an outer wall of the air-blowing unit 10 including the first wall 11, and is guided to the inside air introduction port 14. The particle sensor 40 can determine whether or not air in the passenger compartment 4 is clean by detecting air flowing in the passenger compartment 4.

The vehicular air conditioner 1 according to the present embodiment includes an aspect (shown in Fig. 1) in which the space occupied by the particle sensor 40 overlaps with a region R2 of the boundary region R below the center height position at which the boundary region R is bisected in the vehicle up-and-down direction, and an aspect (not shown) in which the space overlaps with a region R1 of the boundary region R above the center height position. Among these two aspects, it is preferable that the space occupied by the particle sensor 40 overlaps with the region R2 of the boundary region R below the center height position, as shown in Fig. 1. Thus, the particle sensor 40 can more reliably detect air that has passed through the passenger compartment 4. It is more preferable that the air intake port 42 of the particle sensor 40 is disposed in the lower region R2.

In the vehicular air conditioner 1 according to the present embodiment, as shown in Fig. 3, it is preferable that the particle sensor 40 includes the sensor housing 41, the air intake port 42 provided in the sensor housing 41, and a discharge port 43 that discharges measured air, and the particle sensor 40 is attached such that the air intake port 42 is disposed below the discharge port 43. The particle sensor 40 can more reliably detect air that has passed through the passenger compartment 4.

In the vehicular air conditioner 1 according to the present embodiment, it is preferable that the particle sensor 40 is attached to any one of the first wall 11, the second wall 21, and the third wall 31. Among them, as shown in Figs. 1 to 3, it is more preferable that the particle sensor 40 is attached to the first wall 11, and it is further preferable that the particle sensor 40 is attached to an outer wall of the air-blowing section 13 of the first wall 11. The outer wall of the air-blowing section 13 is, for example, an outer wall of a scroll housing. Since the first wall 11 is positioned directly below the inside air introduction port 14, there is a high possibility that the first wall 11 becomes a flow path of air guided from the inside of the passenger compartment 4 to the inside air introduction port 14. Therefore, the particle sensor 40 can more reliably detect air that has passed through the passenger compartment 4.

In the vehicular air conditioner 1 according to the present embodiment, it is preferable that the particle sensor 40 includes the sensor housing 41 and the air intake port 42 provided in the sensor housing 41, and the air intake port 42 opens toward the boundary region R, as shown in Figs. 1 and 3. The particle sensor 40 can more reliably detect air that has passed through the passenger compartment. Figs. 1 and 3 show, as an example, an aspect in which the particle sensor 40 is attached to the first wall 11 and the air intake port 42 opens toward the boundary region R. However, the invention is not limited to this aspect. The invention may adopt an aspect (not shown) in which the particle sensor 40 is attached to the second wall 21 and the air intake port 42 opens toward the boundary region R or an aspect (not shown) in which the particle sensor 40 is attached to the third wall 31 and the air intake port 42 opens toward the boundary region R.

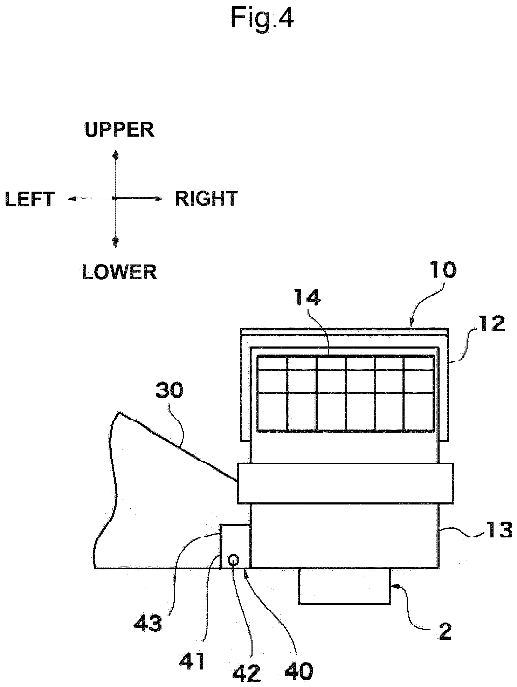

Fig. 4 is a schematic front view showing a modification of an attachment form of the particle sensor. In Fig. 4, a direction from back to front of a paper is a direction from a front side to the rear side of the vehicle. In the vehicular air conditioner 1 according to the present embodiment, it is preferable that the particle sensor 40 includes the sensor housing 41 and the air intake port 42 provided in the sensor housing 41, and the air intake port 42 opens toward the vehicle rear side, as shown in Fig. 4. The particle sensor 40 can more reliably detect air that has passed through the passenger compartment. Fig. 4 shows, as an example, an aspect in which the particle sensor 40 is attached to the first wall 11 and the air intake port 42 opens toward the vehicle rear side, but the invention is not limited to this, and an aspect (not shown) in which the particle sensor 40 is attached to the second wall 21 and the air intake port 42 opens toward the vehicle rear side or an aspect (not shown) in which the particle sensor 40 is attached to the third wall 31 and the air intake port 42 opens toward the vehicle rear side may be adopted. In any of the aspects, it is preferable that the particle sensor 40 is attached such that the air intake port 42 is disposed below the discharge port 43.

### Description of Reference Numerals and Signs

- 1:: vehicular air conditioner
- 2:: HVAC case
- 3:: instrument panel
- 4:: passenger compartment
- 5:: space covered by instrument panel, and space in vehicle
- comp: artment where vehicular air conditioner is installed
- 10:: air-blowing unit
- 11:: first wall
- 12:: intake section
- 13:: air-blowing section
- 14:: inside air introduction port
- 20:: temperature control unit
- 21:: second wall
- 30:: duct
- 31:: third wall
- 40:: particle sensor
- 41:: sensor housing
- 42:: air intake port
- 43:: discharge port
- 51:: virtual surface
- R:: boundary region
- R1:: upper region
- R2:: lower region
- Ra:: upper surface of boundary region
- Rb:: lower surface of boundary region
- Rc:: side surface of boundary region

## Claims

1. A vehicular air conditioner (1) comprising:
an air-blowing unit (10) including an intake section (12) and an air-blowing section (13); a temperature control unit (20); a duct (30) connecting the air-blowing unit (10) and the temperature control unit (20); and a particle sensor (40), the air-blowing unit (10) and the temperature control unit (20) being disposed along a vehicle width direction, wherein
the vehicular air conditioner (1) includes a boundary region (R) formed by a first wall (11) of an outer wall surface of the air-blowing unit (10), the first wall (11) facing a direction of an outer wall surface of the temperature control unit (20), a second wall (21) of the outer wall surface of the temperature control unit (20), the second wall (21) facing a direction of the first wall (11), and a third wall (31) of an outer wall surface of the duct (30), the third wall (31) connecting the first wall (11) and the second wall (21), the boundary region (R) being configured to face a vehicle rear side, and
a space occupied by the particle sensor (40) overlaps with the boundary region (R).

2. The vehicular air conditioner according to claim 1, wherein
the intake section (12) includes an inside air introduction port (14) configured to introduce air in a vehicle compartment, and
the inside air introduction port (14) is located above a center height position at which the boundary region (R) is bisected in a vehicle up-and-down direction.

3. The vehicular air conditioner according to claim 2, wherein
the vehicle compartment includes a passenger compartment (4) behind an instrument panel (3), and
the particle sensor (40) is disposed on a flow path of air guided from inside of the passenger compartment (4) to the inside air introduction port (14).

4. The vehicular air conditioner according to claim 2 or 3, wherein
a space occupied by the particle sensor (40) overlaps with a region (R2) of the boundary region (R) below a center height position at which the boundary region is bisected in the vehicle up-and-down direction.

5. The vehicular air conditioner according to any one of claims 2 to 4, wherein
the particle sensor (40) includes a sensor housing (41), an air intake port (42) provided in the sensor housing (41), and a discharge port (43) configured to discharge measured air, and
the particle sensor (40) is attached such that the air intake port (42) is disposed below the discharge port (43).

6. The vehicular air conditioner according to any one of claims 1 to 5, wherein
the particle sensor (40) is accommodated within the boundary region (R).

7. The vehicular air conditioner according to any one of claims 1 to 6, wherein
the particle sensor (40) is attached to the first wall (11) .

8. The vehicular air conditioner according to any one of claims 1 to 7, wherein
the particle sensor (40) includes a sensor housing (41) and an air intake port (42) provided in the sensor housing (41), and
the air intake port (42) opens toward the boundary region (R) .

9. The vehicular air conditioner according to any one of claims 1 to 7, wherein
the particle sensor (40) includes a sensor housing (41) and an air intake port (42) provided in the sensor housing (41), and
the air intake port (42) opens toward the vehicle rear side.
